(19) **Europäisches Patentamt / European Patent Office / Office européen des brevets**

(11) **EP 2 225 324 B1**

(12) **EUROPEAN PATENT SPECIFICATION**

(45) Date of publication and mention
of the grant of the patent:
**14.12.2016 Bulletin 2016/50**

(51) Int Cl.:
*C08L 23/10* *(2006.01)*   *C08L 23/22* *(2006.01)*
*D01F 6/00* *(2006.01)*

(21) Application number: **08865286.2**

(22) Date of filing: **26.11.2008**

(86) International application number:
**PCT/EP2008/066203**

(87) International publication number:
**WO 2009/080435 (02.07.2009 Gazette 2009/27)**

(54) **POLYOLEFIN FIBRES**

POLYOLEFINFASERN

FIBRES DE POLYOLÉFINE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **24.12.2007 EP 07150417**
**06.02.2008 US 63736 P**

(43) Date of publication of application:
**08.09.2010 Bulletin 2010/36**

(73) Proprietor: **Basell Poliolefine Italia S.r.l.**
**20127 Milano (IT)**

(72) Inventors:
• **DI PIETRO, Fabio**
**I-44100 Ferrara (IT)**
• **DE PALO, Roberto**
**I-44100 Ferrara (IT)**

(74) Representative: **Gaverini, Gaetano Luigi Attilio**
**Basell Poliolefine Italia S.r.l.**
**Intellectual Property**
**P.le G. Donegani 12**
**44100 Ferrara (IT)**

(56) References cited:
**EP-A- 0 527 589      WO-A-93/06168**
**WO-A-2006/042815   JP-A- 2005 002 280**

**Description**

The present invention relates to polyolefin fibres, articles produced from said fibres and a polyolefin composition for the preparation of the said fibres. In particular, the invention concerns a polyolefin composition exhibiting a good balance between mechanical properties, more particularly between tenacity and elongation at break combined with good elastic recovery after deformation and excellent thermal bonding properties, on the fibres produced from it. More specifically, the invention relates to a composition made from a homogenous propylene polymer blended with a polibutene-1 co-polymer material having elastomeric behaviour.

The definition for fibres includes spun bond fibres and/or filaments.

The polyolefin fibres of the present invention are particularly adequate for high tenacity, soft non-woven fabrics for application requiring both elasticity (elastic recovery) and stress resistance (thermal bonding strength) such as disposable sanitary articles and particularly geosynthetic membranes.

It is known in the prior art that a propylene polymer plastomer or elastomer can be blended with a propylene polymer resin and the composition thus obtained is used to produce fibres having a good balance of tenacity and elasticity. The international application WO2005/111282 A1 (Dow) discloses soft and abrasion resistant non woven webs or fabrics comprising fibers made from blends of isotactic propylene and reactor grade propylene based elastomer or plastomers. No butene-1 polymers are added to the blends.

The international application WO93/06168 A1 (Exxon) discloses blends of crystalline polypropylene with poly(1-butene) (600SA Shell) used for the manufacture of fibers balancing the strength properties of propylene with the fiber hand provided by poly(1-butene) having a density from about 0.89 to about 0.92 g/cm$^3$ and MFR from 1-100 dg/min. The document remains silent about elastic recovery and thermal bonding properties of the fibers obtained by such blends.

Now it has surprisingly been found that by blending polybutene-1 co-polymers into a homogenous propylene polymer resin according to the present invention, a polyolefin composition is obtained which can be transformed into fibres having improved balance of properties in comparison with the fibres produced with the resin alone and also with respect to blend comprising propylene based copolymers plastomers and elastomers. Particularly higher values of elongation at break and still good tenacity are exhibited by the composition of the present invention together with maintained or in some cases improved elastic recovery and excellent thermal bonding forces.

A great advantage in the use of the composition of the present invention in the production of fibres is that due to improved thermal bonding forces combined with elasticity is found in applications such as geotextiles. The said feature leads to improved durability and shear or tear resistance of the geosynthetics (e.g. geotextiles) thereof.

Another advantage of the present invention is that softness of the fibres and, consequently, of the non-woven fabrics thereof is also increased when producing calendered items (spunbond non-wovens) due to the improved thermal bonding that enables also acceleration of cycle time in production and/or reduction of the calendering temperature maintaining the needed bonding strength without deterioration of softness and elasticity of the item. Users will particularly appreciate that certain articles, in particular disposable sanitary articles, exhibit adequate softness combined with good tear resistance.

Therefore, an embodiment of the present invention is a polyolefin composition according to claims 1 to 3 comprising (in percentage by weight relative to the total weight of component A and B):

A) 50-90 %wt, preferably from 60 to 90 %wt, more preferably from 65 to 85%wt, of a propylene homo-polymer with an isotactic index (percentage by weight of fraction insoluble in boiling n-heptane) higher than 80, preferably between 90 and 98, or crystalline co-polymer of propylene with ethylene and/or an alpha -olefin having 4-10 carbon atoms, containing 85% or more of propylene and having an isotactic index equal to or higher than 80;
B) 10-50%wt, preferably from 10 to 40%wt, more preferably from 15 to 35%wt, of a Butene-1 (co)polymer having a content of butene-1 units in the form of isotactic pentads (mmmm) from 25 to 70%; intrinsic viscosity [η] measured in tetraline at 135°C from 1 to 3dL/g; a content of xylene insoluble fraction at 0°C from 3 to 60%.

Another embodiment according to the present invention is therefore a fibre made from the said polyolefin composition.

The fibres according to the present invention typically exhibit softness, elongation at break and elastic recovery improved or maintained with respect to the values of polymer (A) alone. A very high thermal bonding force contributes to the excellent balance of properties. Typically the thermal bonding force exhibited by fibers produced from the blends according to the present invention is at least 200 cN preferably higher than 230 cN (measured according the method specified below).

The above propylene homo or co-polymer component (A) preferably has a value of melt flow rate from 10 to 50, more preferably from 20 to 35 g/10 min measured according to ISO 1133 at 230°C, 2.16 Kg. As it is known, high MFR values are obtained directly in polymerization or by controlled radical degradation of the polymer by adding free-radical generators, such as organic peroxides, in the spinning lines or during previous pelletizing stages of the olefin polymers.

The polymer component (A) preferably exhibits a molecular weight distribution (Mw/Mn) measured according to the method specified below, ranging from 2 to 8.

In particular when polymer component (A) is produced with a Ziegler Natta catalyst Mw/Mn is in the range 3 to 4, preferably from 3.2 to 3.4.

In particular when polymer component (A) is produced with a metallocene cathalyst Mw/Mn is in the range from 2 to 3, preferably from 2.4 to 2.6.

The polymer component (A) exhibits a stereoregularity of the isotactic type. It is either a propylene homopolymer or a random polymer of propylene with an $\alpha$-olefin selected from ethylene and a linear or branched $C_4$-$C_8$ $\alpha$-olefin, such as copolymers and terpolymers of propylene. Polymer resin (A) can also be mixtures of the said polymers, in which case the mixing ratios are not critical. Preferably, the $\alpha$-olefin is selected from the class consisting of ethylene, 1-butene, 1-pentene, 1-hexene, 1-heptene, 1-octene, 1-nonene, 1-decene and 4-methyl-1-pentene. The preferred amount of comonomer content ranges up to 15% by weight.

Component (B) is a butene-1 (co)polymer having low isotacticity and a suitable balance between elastomeric properties (compression set, elongation at break) and those connected to the more crystalline fraction (tensile stress at break, or at yield). In the present invention for butene-1 (co)polymer it is ment Butene-1 homopolymers and copolymers with one or more $C_2$-$C_{10}$ alfa-olefins as comonomer, provided that butene-1 is excluded as a comonomer. The preferred comonomers are propylene and/or ethylene. When propylene is the comonomer in the Butene-1 copolymer it is present in amounts up to 10%wt, preferably up to 7%wt with respect to the copolymer weight. When ethylene is the comonomer in the Butene-1 copolymer it is present in amounts up to 5%wt, preferably up to 2%wt with respect to the copolymer weight. Particularly preferred as comonomer is propylene.

The butene-1 (co)polymer component (B) additionally exhibits one or more of the following properties:

- Ratio ES2/ES1 $\geq$1, where ES1 is the boiling diethyl ether soluble fraction determined on the polymer as such and ES2 is the boiling diethyl ether soluble fraction determined after milling the polymer according to the method specified below.
- Molecular weight distribution (Mw/Mn) measured according to the method specified below, ranging from 3.5 to 9; more preferably ranging from 4 to 8 and in particular in the range 4-7;
- Heat of fusion ($\Delta$H) measured via Differential Scanning Calorimetry (DSC) lower than 10 J/g and melting temperature (TmII) lower than 106°C preferably lower than 103°C and more preferably lower than 100°C. In some cases the melting point can even be absent.
- Compression Set (25% - 22 hours) lower than 90 %, preferably lower than 80 and more preferably lower than 50, and
- Stress at break in the range of higher than 6 preferably from 6.5 to 20 Mpa.

The Shore A (measured according to ISO 868, load time 15 sec) value is generally lower than 80 and in certain cases lower than 60.

The propylene homo or co-polymer component (A) can be produced by conventional processes polymerizing propylene and, optionally, an $\alpha$-olefin mentioned above in the presence of an opportune catalyst, such as a stereospecific Ziegler-Natta catalysts or a metallocene catalyst.

The polymer component (A) obtained by metallocene based catalyst are preferably obtained by using as metallocene compound a bridged benzoindenyl zirconium dichloride. Said compound is then supported on Silica and activated by using an alumoxane, preferably methylalumoxane, according to the procedure known in the art. The propylene polymer are obtained with a process in slurry by using propylene monomer as diluent and two reactor in series. An example of such kind of process and catalyst is found in the International patent application WO2005/005495 A1.

The propylene polymer (A) obtained by polymerising propylene in the presence of a stereospecific Z/N catalyst using the liquid monomer (propylene) as a diluent. The stereospecific Ziegler-Natta catalysts comprise a solid catalyst component comprising at least one titanium compound having at least one titanium-halogen bond and at least an electron-donor compound (internal donor), both supported on magnesium chloride compound. The Ziegler-Natta catalyst systems further comprise an organo-aluminum compound as essential co-catalyst and optionally an external electron-donor compound. Preferably, the internal electron donor compound is selected from 1,3-diethers. As mentioned above, it is preferable to carry out the polymerization process in liquid phase, using the liquid propylene as the main diluent (bulk polymerization). Preferably, the bulk polymerization is carried out in one or more loop reactors which are connected in series. An example of such kind of process and catalyst is found in the International patent application WO2006/042815 A1.

The butene-1 (co)polymer component (B) can be produced as described in the international patent application WO 2006/042815. The monomers are polymerized in the presence of a low stereospecificity catalyst comprising (a) a solid component comprising a Ti compound and an internal electron-donor compound supported on $MgCl_2$; (b) an alkylaluminum compound. In a preferred aspect of the process for the preparation of the (co)polymers of the invention the external electron donor compound is not used in order not to increase the stereoregulating capability of the catalyst. In cases in which the external donor is used, its amount and modalities of use should be such as not to generate a too high amount of highly stereoregular polymer.

Magnesium dichloride in active form is preferably used as a support. It is widely known from the patent literature that magnesium dichloride in active form is particularly suited as a support for Ziegler-Natta catalysts. In particular, USP 4,298,718 and USP 4,495,338 were the first to describe the use of these compounds in Ziegler-Natta catalysis. It is known from these patents that the magnesium dihalides in active form used as support or co-support in components of catalysts for the polymerization of olefins are characterized by X-ray spectra in which the most intense diffraction line that appears in the spectrum of the non-active halide is diminished in intensity and is replaced by a halo whose maximum intensity is displaced towards lower angles relative to that of the more intense line.

The preferred titanium compounds used in the catalyst component of the present invention are $TiCL_4$ and $TiCl_3$; furthermore, also Ti-haloalcoholates of formula $Ti(OR)_{n-y}X_y$, where n is the valence of titanium, X is halogen, preferably chlorine, and y is a number between 1 and n, can be used.

The internal electron-donor compound is preferably selected from esters and more preferably from alkyl, cycloalkyl or aryl esters of monocarboxylic acids, for example benzoic acids, or polycarboxylic acids, for example phthalic or succinic acids, the said alkyl, cycloalkyl or aryl groups having from 1 to 18 carbon atoms. Examples of the said electron-donor compounds are diisobutyl phthalate, diethylphtahalate and dihexylphthalate. Generally, the internal electron donor compound is used in molar ratio with respect to the $MgCl_2$ of from 0.01 to 1 preferably from 0.05 to 0.5.

The preparation of the solid catalyst component can be carried out according to several methods.

According to one preferred method, the solid catalyst component can be prepared by reacting a titanium compound of formula $Ti(OR)_{n-y}X_y$, where n is the valence of titanium and y is a number between 1 and n, preferably $TiCl_4$, with a magnesium chloride deriving from an adduct of formula $MgCl_2 \cdot pROH$, where p is a number between 0,1 and 6, preferably from 2 to 3.5, and R is as hydrocarbon radical having 1-18 carbon atoms. The adduct can be suitably prepared in spherical form by mixing alcohol and magnesium chloride in the presence of an inert hydrocarbon immiscible with the adduct, operating under stirring conditions at the melting temperature of the adduct (100-130°C). Then, the emulsion is quickly quenched, thereby causing the solidification of the adduct in form of spherical particles. Examples of spherical adducts prepared according to this procedure are described in USP 4,399,054 and USP 4,469,648. The so obtained adduct can be directly reacted with the Ti compound or it can be previously subjected to thermal controlled dealcoholation (80-130C) so as to obtain an adduct in which the number of moles of alcohol is generally lower than 3 preferably between 0,1 and 2,5. The reaction with the Ti compound can be carried out by suspending the adduct (dealcoholated or as such) in cold $TiCl_4$ (generally 0°C); the mixture is heated up to 80-130°C and kept at this temperature for 0,5-2 hours: The treatment with $TiCl_4$ can be carried out one or more times. The internal electron donor compound can be added during the treatment with $TiCl_4$. The treatment with the electron donor compound can be repeated one or more times.

The preparation of catalyst components in spherical form is described for example in European Patent Applications EP-A-395083, EP-A-553805, EP-A-553806, EPA-601525 and WO98/44001. The solid catalyst components obtained according to the above method show a surface area (by B.E.T. method) generally between 20 and 500 $m^2$/g and preferably between 50 and 400 $m^2$/g, and a total porosity (by B.E.T. method) higher than 0,2 $cm^3$/g preferably between 0,2 and 0,6 $cm^3$/g. The porosity (Hg method) due to pores with radius up to 10.000Å generally ranges from 0.3 to 1.5 $cm^3$/g, preferably from 0.45 to 1 $cm^3$/g.

The alkyl-Al compound (B) is preferably chosen among the trialkyl aluminum compounds such as for example triethylaluminum, triisobutylaluminum, tri-n-butylaluminum, tri-n-hexylaluminum, tri-n-octylaluminum. It is also possible to use mixtures of trialkylaluminum's with alkylaluminum halides, alkylaluminum hydrides or alkylaluminum sesquichlorides such as $AlEt_2Cl$ and $Al_2Et_3Cl_3$.

If used the external donors (C) are preferably selected among silicon compounds of formula $R_a^5R_b^6Si(OR^7)_c$, where a and b are integer from 0 to 2, c is an integer from 1 to 3 and the sum (a+b+c) is 4; $R^5$, $R^6$, and $R^7$, are alkyl, cycloalkyl or aryl radicals with 1-18 carbon atoms optionally containing heteroatoms. A particularly preferred group of silicon compounds is that in which a is 0, c is 3, b is 1 and $R^6$ is a branched alkyl or cycloalkyl group, optionally containing heteroatoms, and $R^7$ is methyl. Examples of such preferred silicon compounds are cyclohexyltrimethoxysilane, t-butyltrimethoxysilane and thexyltrimethoxysilane. The use of thexyltrimethoxysilane is particularly preferred.

If used the external electron donor compound (C) is fed in such an amount to give a weight ratio between the organoaluminum compound and said electron donor compound of from higher than 500 preferably higher than 700.

It is also possible to pre-polymerize said catalyst in a pre-polymerization step. Said prepolymerization can be carried out in liquid, (slurry or solution) or in the gas-phase, at temperatures generally lower than 100°C, preferably between 20 and 70°C. The pre-polymerization step is carried out with small quantities of monomers for the time which is necessary to obtain the polymer in amounts of between 0.5 and 2000g per g of solid catalyst component, preferably between 5 and 500 and, more preferably, between 10 and 100g per g of solid catalyst component.

The polymerization process can be carried out according to known techniques, for example slurry polymerization using as diluent a liquid inert hydrocarbon, or solution polymerization using for example the liquid butene-1 as a reaction medium. Moreover, it may also be possible to carry out the polymerization process in the gas-phase, operating in one or more fluidized or mechanically agitated bed reactors. The polymerization carried out in the liquid butene-1 as a reaction medium is highly preferred.

The polymerization is generally carried out at temperature of from 20 to 120°C, preferably of from 40 to 90°C. The polymerization can be carried out in one or more reactors that can work under same or different reaction conditions such as concentration of molecular weight regulator, comonomer concentration, external electron donor concentration, temperature, pressure etc. When two or more are employed the set up can be in the cascade mode where monomer/catalyst/polymer reaction mixture coming from the first reactor is fed to the successive one. Alternatively, in the parallel set up, two or more reactors with their own feeding systems work independently and the monomer/catalyst/polymer reaction mixture coming from these reactors are collected together and directed to the finishing section. Working in at least two reactors under different conditions can lead to the preparation of butene-1 (co)polymers with different average molecular weight and/or different stereoregularity in the two reactors. Moreover, working in more than one reactor under different conditions has the advantage that the various polymerization stages can be properly modulated so as to properly tailoring the properties of the final polymer. This technique can be adopted when products having a very high amount of xylene soluble fractions are to be produced. These products in fact, can give problems during certain operations such as pelletization. The applicant noted that producing two polymers having a different content of xylene insoluble fraction in two distinct reactor in series gives raise to a final polymer that is better processable than the product deriving from only one polymerization stage having the same amount of final xylene insoluble fraction. This can be done for example by using only in one or more selected reactors a small amount of external donor that allows the catalyst to be more stereospecific.

The polyolefin composition according to the present invention is prepared as follows. The butene-1 (co)polymer component (B) can be blended to polymer component (A) in neat form or, preferably, as part of a masterbatch, in such a case component (B) is previously dispersed in a propylene polymer resin that can be same as or different from polymer component (A). The concentrate thus prepared is then blended to polymer component (A).

The propylene polymer composition according to the present invention can be prepared according to conventional methods, for examples, mixing polymer component (A), component (B) or the concentrate thereof and well known additives in a blender, such as a Henschel or Banbury mixer, to uniformly disperse the said components, at a temperature equal to or higher than the polymer softening temperature, then extruding the composition and pelletizing.

The polymer composition is usually added with additives and/or peroxides, whenever the latter are necessary to obtain the desired MFR.

The said additives added to the above mentioned polymers or polymer composition comprise the common additives to polymers such as pigments, opacifiers, fillers, stabilizers, flame retardants, antacids and whiteners.

The composition of the present invention are particularly suitable for the preparation of fibres according to claim 4 as above said.

Yet another embodiment of the present invention relates to articles, in particular non-woven fabrics and geotexile, according to claims 5 and 6, produced with the above-mentioned fibres.

Both fibres and articles produced with the fibres are produced according to known methods. In particular, the fabric of the present invention can be prepared with the well-known processes for the preparation of spun-bond non-woven fabrics, with which the fibres are spread to form directly a fibre web and calendered so as to obtain the non-woven fabric.

In a typical spunbonding process, the polymer is heated in an extruder to the melting point of the polyolefin composition and then the molten polyolefin composition is pumped under pressure through a spinneret containing a number of orifices of desired diameter, thereby producing filaments of the molten polymer composition and without subjecting the filaments to a subsequent drawing.

The equipment is characterised by the fact that it includes an extruder with a die on its spinning head, a cooling tower an air suction gathering device that uses Venturi tubes.

Underneath this device that uses air speed to control the filaments speed and are usually gathered over a conveyor belt, where they are distributed forming a web according to the well-known method.

- When using typical spunbonding machinery, it is usually convenient to apply the following process conditions: the output per hole ranges from 0.3-0.8 g/min, preferably from 0.4-0.6 g/min;
- the molten polymer filaments fed from the face of the spinneret are generally cooled by means of an air flow and are solidified as a result of cooling;
- the spinning temperature is generally between 200° and 300° C.

The fabric can be constituted by monolayer or multilayer non-woven fabrics.

In a preferred embodiment, the non-woven fabric is multilayered and at least one layer comprises fibres formed from said polyolefin composition. The other layer may be obtained by spinning processes other than spunbonding and may comprise other types of polymers.

The particulars are given in the following examples, which are given to illustrate, without limiting, the present invention.

The following analytical methods have been used to determine the properties reported in the detailed description and in the examples.

- **Melt flow rate**: Determined according to ISO method 1133 (MIL 230° C and 2.16 kg MIE 190°C and 2.16 Kg, MEF 190°C and 21.60 Kg)

- **MWD (Mw/Mn) determination by Gel Permeation Chromatography (GPC)**

MWD curves are determined using a Waters 150-C ALC/GPC system equipped with a Infrared detector IR4 POLIMERCHAR and with a TSK column set (type GMHXL-HT) working at 135°C with 1,2,4-trichlorobenzene as solvent (TCB) (stabilized with 0.1 vol. of 2, 6-di-t-butyl p-cresole (BHT)) at flow rate of 1 ml/min. The sample is dissolved in TCB by stirring continuously at a temperature of 140°C for 1 hour.

The solution is filtered through a 0.45 $\mu$m Teflon membrane. The filtrate (concentration 0.08-1.2g/l injection volume 300 $\mu$l) is subjected to GPC. Monodisperse fractions of polystyrene (provided by Polymer Laboratories) were used as standard. The universal calibration for PB copolymers was performed by using a linear combination of the Mark-Houwink constants for PS (K=1.21x10-4dl/g; $\alpha$=0.706) and PB(K=1.78x10-4dl/g; $\alpha$ =0.725), PE (K=4.06x10-4dl/g; $\alpha$=0.725), PP (K=1.90x10-4dl/g; $\alpha$=0.725) weighted for the comonomer content in the copolymer.

Data Acquisition and processing was performed with the software Water Empower v.1.

- Comonomer Content $^{13}$C NMR analysis

$^{13}$C-NMR spectra were performed on a polymer solution (8-12 %wt) in dideuterated 1,1,2,2-tetrachloro-ethane at 120°C. The $^{13}$C-NMR spectra were acquired on a Bruker DPX-400 spectrometer operating at 100.61 MHz in the Fourier transform mode at 120 °C using a 90° pulse, 15 seconds of delay between pulses and CPD (WALTZ16) to remove $^{1}$H-$^{13}$C coupling.

About 1500-2000 transients were stored in 32K data points using a spectral window of 60 ppm (0-60ppm).

Comonomer content in Butene/propylene copolymer

The propylene content was obtained from the triad distribution ([P] = [PPP]+[PPB]+[BPB]) which is calculated as:

$$BBB = M/\textstyle\sum \qquad BBP = L/\textstyle\sum \qquad PBP = I/\textstyle\sum$$
$$BPB = 0.5\,D/\textstyle\sum \qquad BPP= [A+0.5\,(B+E)]/\textstyle\sum \qquad PPP = (C+0.5B)/\textstyle\sum$$

Where $\sum$ = M +L+I+0.5D+. [A+0.5 (B+E)]+ (C+0.5B) and A, B, C, D, E, I, L, M are the integrals of the peaks in the $^{13}$C-NMR spectrum (The peak at 27.73 ppm due the $CH_2$ carbon in the branch of an isotactic BBBBB pentad is used as internal reference). The assignment of these peaks are made according to H.N. Cheng, Journal of Polymer Science, Polymer Physics Edition, 21, 573 (1983) and are reported in Table A.

**Table A**

| Area | Chemical Shift | assignments | Sequence |
|------|----------------|-------------|----------|
| A | 47.15 | $CH_2$ chain | BPPB |
| B | 46.83 | $CH_2$ chain | PPPB |
| C | 46.52 | $CH_2$ chain | PPPP |
| D | 43.67 | $CH_2$ chain | BPBX |
| E | 43.37 | $CH_2$ chain | PPBX |
| I | 28.13 | $CH_2$ branch | PBP |
| L | 27.93 | $CH_2$ branch | BBP |
| M | 27.73 | $CH_2$ branch | BBB |

- Determination of mmmm% by $^{13}$C NMR

The assignment of the pentad signals in the region of branch methylene carbons was made according to *Carbon-13 NMR Spectral Assignment of Five Polyolefins Determined from the Chemical Shift Calculation and the Polymerization Mechanism,* T. Asakura and others, Macromolecules 1991, 24 2334-2340.

Due to the superimposition between stereoirregular pentads, the mmmm pentad was obtained by fitting the experimental pentad distribution with the two-site model described in *Two-site model analysis of $^{13}$C NMR of polypropylene polymerized by Ziegler -Natta catalyst with external alkoxysilane donors,* R. Chûjô, Y. Kogure, T. Väänänen, Polymer, 1994, 35, 339-342. The mmmm % reported corresponds to the value obtained in the best fit procedure.

- solubility in xylene (XS) at ambient temperature

2.5 g of polymer are dissolved in 250 ml of xylene, at 135 °C, under agitation. After 20 minutes, the solution is cooled to 25 °C under stirring, and then it is allowed to settle for 30 minutes. The precipitate is filtered with filter paper; the solution is evaporated under a nitrogen current, and the residue dried under vacuum at 80 °C until constant weight. The weight percentage of polymer soluble in xylene at ambient temperature (Xylene Solubles - XS) is then calculated. The percent by weight of polymer insoluble in xylene at ambient temperature is considered the **isotactic index** of the polymer. This value corresponds substantially to the isotactic index determined by extraction with boiling n-heptane, which by definition constitutes the isotactic index of polypropylene.

- Determination of Xylene Insoluble Fraction

- In order to determine the fraction insoluble in xylene at 0°C (X.I.%), 2.5 g of polymer are dissolved under agitation in 250 ml of xylene at 135°C, and after 20 minutes it is allowed to cool to 0°C. After 30 minutes the precipitated polymer is filtered and dried at reduced pressure at 80°C until constant weight is reached.

- Shore A

Measured according to ISO 868, loading time 15 sec.

- Tensile Properties (on plaques)

Measured according to ISO 527-Tensile on a 1.9 mm thick plaque obtained by compression molding (at 200°C with an cooling of 30°/min) of a polymer composition obtained by mixing in a Brabender the relevant copolymer sample with 1% 2,6- di-t-butyl-4-methyl phenol (BHT) at 180°C. Except where otherwise stated all mechanical measurements have been carried out after the specimens have been kept for 10'in autoclave at room temperature and 2 kbar pressure.

- Compression set

Measured according to ASTM D395B type 1 on compression molded samples that have been treated for 1 minute in autoclave at room temperature and 2 kbar. The so obtained specimens were compressed 25% of the original thickness and put in an oven at 70°C or 23 °C for 22 hours.

- Intrinsic viscosity [η]

Determined in tetrahydronaphthalene at 135°C (ASTM 2857-70).

- Thermal Properties

The melting points (Tm) of the polymers of the examples were measured by Differential Scanning Calorimetry (D.S.C.) on a Perkin Elmer DSC-1 calorimeter, previously calibrated against indium and zinc melting points. The weight of the samples in every DSC crucible was kept at $6.0 \pm 0.5$ mg.

For the copolymers of butene (B) the two different crystalline forms of polybutene (i.e. Form I and Form II) are distinguishable, in a DSC melting thermogram, because they have distinct melting points: Form I melts always at higher temperature than Form II. Moreover, Form II precipitates during the crystallization from the melt while the more stable Form I forms upon annealing at room temperature for a certain amount of time.

The data acquisition in continuous heating mode has been carried out as follows:

a) The weighted sample was sealed into aluminum pans and heated to 180°C at 10°C/minute. The sample was kept at 180°C for 5 minutes to allow a complete melting of all the crystallites, then cooled to -20°C at 10°C/minute. After standing 2 minutes at -20°C, the sample was heated for the second time to 180°C at 10°C/min. In this second heating run, the peak temperature was taken as the melting temperature of Form II (Tm II) and the area of the peak as its melting enthalpy (ΔHII).

b) annealing of the samples at room temperature for different length of time (from a few hours up to several days);

c) heating up scan from room temperature to 180°C with heating rate of 10°C/min to obtain the thermograms necessary to measure the evolution of the Form II → Form I solid-solid transformation, thus measuring the melting temperature of Form I (Tm I) and the area of the peak as its melting enthalpy (ΔHI).

- Determination of Diethyl ether soluble Fraction (DDF)

In order to determine the fraction soluble in diethyl ether, the (co)polymer was extracted according to Kumagawa procedure. In an inert atmosphere, 2 g of polymer are transferred in a cellulose thimble and suspended with a glass cylinder over 300 mL of diethyl ether. The ether is warmed at the reflux temperature and the vapours, condensed in a buble condenser, continuously drop on the polymer. In this way the polymer is constantly covered by the solvent and the extraction temperature is practically equal to the ether reflux temperature.

The extraction is conducted for 15 hours. The soluble fraction is recovered by adding methanol (600 mL) to the ether solution. After 30 minutes the precipitated polymer is filtered and dried at reduced pressure at 80°C until constant weight is reached.

filtered and dried at reduced pressure at 80°C until constant weight is reached.

- Milling Procedure

40 g of (co)polymer are introduced in a Brabender 2100 having a chamber size of 55 cm$^3$, and subject to mixing conditions at a temperature of 140°C, for 5'at 90 rpm. After that the polymer is discharged and subject to additional DDF test.

- Tenacity and Elongation at break of filaments:

A 100 mm long segment is cut from a 500 m roving. From this segment the single fibres to be tested are randomly chosen. Each single fibre to be tested is fixed to the clamps of an Instron dinamometer (model 1122) and tensioned to break with a traction speed of 20 mm/min for elongations lower than 100% and 50 mm/min for elongations greater than 100%, the initial distance between the clamps being of 20 mm. The ultimate strength (load at break) and the elongation at break are determined.

The tenacity is derived using the following equation:

$$\text{Tenacity} = \text{Ultimate strength (cN)} \times 10/\text{Titre (dtex)}.$$

- Elastic recovery of filaments

Elastic recovery was measured with dynamometer at 23°C. The spun fiber samples were prepared according to extrusion/spinning conditions specified in the examples. Single fibers were randomly chosen as above said from a 500 m roving.

Two deformations cycles were applied to the samples under the following conditions:,

First cycle

- Initial Cross head distance 200 mm,
- cross head speed 3.3 mm/s,
- maximum cross head distance at maximum deformation 400 mm
- relaxation time at maximum cross head distance 60 seconds
- reverse cross head speed 3.3 mm/second
- cross head time at the end of the deformation cycle (cross head distance 200 mm) 180 seconds

second cycle

- Initial Cross head distance 200 mm,
- cross head speed 3.3 mm/s,
  residual deformation: it's the value of the deformation recorded when the load cell starts to record a tensional force in the second cycle corresponding to the formula

$$\text{residual deformation} = (\text{current crosshead distance - initial crosshead distance})/(\text{initial crosshead distance}).$$

- end of test

Elastic recovery is the value of the maximum deformation (400 mm) corresponding in the present test to 100% deformation with respect to the initial cross head distance (200 mm) minus the residual deformation as above defined.

- Thermal bonding strength

The thermal bonding strength was measured with a dynamometer on spun fiber samples prepared according to extrusion/spinning conditions specified in the examples. Single fibers were randomly chosen as above said from a 500 m roving.
The samples were subjected to bonding and tested for measuring the bonding strength under the following conditions:

Bonding condition

| | |
|---|---|
| - Temperature | 150°C; |
| - filament titre | 4000 dTex |
| - number of foldings | to obtain a final titre of 4000 dTex |
| - bonding time | 1 Second. |
| - bonding pressure | 800 N; |

Force measurement condition (Average area under the curve, cN)

| | |
|---|---|
| -cross head speed | 20 mm/min. |
| - initial cross head distance | 20 mm |

**Polymer Components used in the examples and comparative examples**

The following isotactic propylene homopolymers were used.

| Polymer | MFR g/10 min | $\overline{M}_w/\overline{M}_n$ | Solubility in xylene wt% (crystallinity parameter) |
|---|---|---|---|
| Polymer A1 | 25 | 3.2-3.4 | 2.75-3.75 |
| Polymer A2 | 30 | 3.2-3.4 | 2.75-3.75 |
| Polymer A3 | 25 | 2.3 - 2.6 | <1.0 |
| Polymer A4 | 30 | 2.3 - 2.6 | <1.0 |

Polymers A1 to A2 are commercial polymers prepared directly with the reported MFR values and molecular weight distribution by homo polymerising propylene in the presence of a stereo specific Z/N catalyst using the liquid monomer (propylene) as a diluent.
Polymers A2 to A3 are commercial polymers prepared directly with the reported MFR values and molecular weight distribution by homo polymerising propylene in the presence of a metallocene type catalyst as above said.

The following butene-1 (co)polymer was used.

- Preparation of Solid Catalyst Component

Into a 500 ml four-necked round flask, purged with nitrogen, 225 ml of TiCl$_4$ were introduced at 0°C. While stirring, 6.8 g of microspheroidal MgCl$_2$•2.7C$_2$H$_5$OH (prepared as described in Ex. 2 of USP 4,399,054 but operating at 3,000 rpm instead of 10,000) were added. The flask was heated to 40°C and 4.4 mmoles of diisobutylphthalate were thereupon added. The temperature was raised to 100°C and maintained for two hours, then stirring was discontinued, the solid product was allowed to settle and the supernatant liquid was siphoned off.

200 ml of fresh TiCl$_4$ were added, the mixture was reacted at 120°C for one hour then the supernatant liquid was siphoned off and the solid obtained was washed six times with anhydrous hexane (6 x 100 ml) at 60°C and then dried under vacuum. The catalyst component contained 2.8 wt% of Ti and 12.3 wt% of phthalate.

- Preparation of butene-1/ propylene copolymer by sequential polymerization

The sequential polymerization was carried out in two liquid-phase stirred reactors connected in series in which liquid butene-1 constituted the liquid medium; propylene was fed after feeding of butene-1 in order to obtain an amount of bonded propylene in the final copolymer of 3-5%wt. The catalyst described above was used. the weight ratio Al-alkyl/cat weight ratio was 40 and the first reactor worked at 75°C without hydrogen being fed. After 150 minutes of polymerization the content of the first reactor was transferred into the second reactor where also thexyltrimethoxysilane as external donor was used at Tibal/donor weight ratio of 600-800.

The polymerization continued in the second reactor for 100 minutes, then was stopped and the final polymer was collected and characterized. On the basis of the polymerization activity, about 75% of the total copolymer was produced in the first polymerization step.

|  |  | Polymer B |
|---|---|---|
| C3 wt% NMR |  | 4.1 |
| MIE | g/10min | 0.5 |
| MEF |  | 23.7 |
| Elongation at break | % | 435 |
| Compr. set (25%, 22h 70°C) | % | 45 |
| Shore A |  | 80.6 |
| DSC - TmI | °C | 105.8 |
|  |  |  |
| X.I. xylene insolubles | %wt | <1% |
| [η] intrinsic viscosity | dL/g | 2.31 |
| ES2/ES1 |  | - |
| ΔHI | J/g | 30.4 |
| mmmm | % | 51.4 |

Examples 1-5

It was prepared a polymer composition by mixing and extruding the polymer components listed in Table 1 and the below-mentioned additives in a Leonard 25 extruder under the following conditions:

- melt temperature of the polymer composition (reported in the table);
- Length: 70 cm
- Diameter: 25 mm
- Compression ratio: 3

The composition contained 0.03 wt% of calcium stearate and 0.08 wt% of Irgafos 168.

The polymer components and properties of the composition thus obtained are reported in Table 1.

The composition was then subjected to spinning by operating at the conditions set forth below:

- spinning temperature equal to the melt temperature of the polymer composition;
- hole diameter: 0.6 mm;
- length/diameter (1/d) : 5
- titre: 2.2 dtex
- Spinning speed: 2700 m/min

The spun fibres were gathered and tested. In Table 2 the properties of the fibres are reported.

Reference Examples 1 and 2 (1R, 2R)

Example 1 was repeated with the base material as a reference using polymer component

(A) alone. Polymers A1 (ex. 1R) and A2 (ex. 2R) without addition of the butene-1 copolymer
(B) were spun.

In Table 1 the properties of the fibres are reported.

Table 1

| Components and Properties | | Reference 1R | Examples | | | Reference 2R | Examples | |
|---|---|---|---|---|---|---|---|---|
| | | | 1 | 2 | 3 | | 4 | 5 |
| Polymer A, parts by weight | A1 | 100 | 80 | 70 | 60 | | | |
| | A2 | | | | | 100 | 80 | 70 |
| MFR of polymer A, g/10 min | | 25 | | | | 30 | | |
| Polymer B, parts by weight | | | 20 | 30 | 40 | | 20 | 30 |
| Spinning Condition and Properties of the Composition fibers | | | | | | | | |
| Maximum spinning speed, m/min | | 4500 | 4200 | 4200 | 3900 | 4500 | 4200 | 3900 |
| Melting Temperature, °C | | 263 | 263 | 263 | 263 | 228 | 228 | 228 |
| Tenacity, cN/dtex | | 28.2 | 17.7 | 19.8 | 16.9 | 30.2 | 18.0 | 19.0 |
| Elongation at break, % | | 225 | 230 | 220 | 145 | 215 | 305 | 245 |
| Elastic recovery | | 32.1 | 30.2 | 33.3 | 40 | 30.9 | 30.4 | 32.3 |
| Thermal Bonding strength | | 110 | 235 | 265 | 570 | 115 | 410 | 410 |

Comparative Example 6-8

Example 1 was repeated except that instead of the butene-1 copolymer (B) a polypropylene based plastomer commercialized under the tradename Vistamax 4200 by Exxon, was added. The polymer components and their amounts are reported in Table 2.

Table 2

| Components and Properties | | Reference 1R | Comparative Examples | | |
|---|---|---|---|---|---|
| | | | 6 | 7 | 8 |
| Polymer A, parts by weight | A1 | 100 | 80 | 70 | 60 |
| MFR of polymer A, g/10 min | | 25 | | | |
| Polymer Vistamax, parts by weight | | | 20 | 30 | 40 |
| Spinning Condition and Properties of the Composition fibers | | | | | |

(continued)

| Components and Properties | Reference 1R | Comparative Examples | | |
|---|---|---|---|---|
| | | 6 | 7 | 8 |
| Maximum spinning speed, m/min | 4500 | 4500 | 4200 | 3900 |
| Melting Temperature, °C | 263 | 263 | 263 | 263 |
| Tenacity, cN/dtex | 28.2 | 21.4 | 25.0 | 24.3 |
| Elongation at break, % | 225 | 160 | 165 | 205 |
| Elastic recovery | 32.1 | 26.8 | 27.4 | 28.9 |
| Thermal Bonding strength (150°C) | 110 | | 235 | 285 |

Example 9-12

Example 1 was repeated except that polymer A3 and A4 were used as component (A) in blend with the copolymer component (B).

Reference Examples 3 and 4 (3R, 4R)

Example 1 was repeated with Polymers A3 (ex. 3R) and A4 (ex.4R) as polymer component (A) alone. The polymers were spun without addition of the butene-1 copolymer (B) as a reference.

The polymer components and their amounts are reported in Table 3.

Table 3

| Components and Properties | | Reference 3R | Examples | | Reference 4R | Examples | |
|---|---|---|---|---|---|---|---|
| | | | 9 | 10 | | 11 | 12 |
| Polymer A, parts by weight | A3 | 100 | 80 | 70 | | | |
| | A4 | | | | 100 | 80 | 70 |
| MFR of polymer A, g/10 min | | 25 | | | 30 | | |
| Polymer B, parts by weight | | | 20 | 30 | | 20 | 30 |
| Spinning Condition and Properties of the Composition | | | | | | | |
| Maximum spinning speed, m/min | | 4500 | 3900 | 3300 | 4500 | 4200 | 3000 |
| Melting Temperature, °C | | 140 | 125 | 125 | 140 | 125 | 125 |
| Tenacity, cN/dtex | | 32.9 | 16.1 | 15.8 | 29.9 | 18.3 | 13.2 |
| Elongation at break, % | | 185 | 245 | 330 | 140 | 345 | 335 |
| Elastic recovery | | 37 | 33 | 37 | 30 | 32.7 | 37.3 |
| Thermal Bonding strength | | 70 | 185 | 220 | 150 | 275 | 200 |

**Claims**

1. A polyolefin composition comprising:

   A) 50-90 %wt of of polypropylene homopolymer with an isotactic index (percentage by weight of fraction insoluble in boiling n-heptane) higher than 80, preferably between 90 and 98, or crystalline copolymer of propylene with ethylene and/or an alpha -olefin having 4-10 carbon atoms, containing 85% or more of propylene and having an isotactic index equal to or higher than 80;
   B) 10-50%wt of Butene-1 (co)polymers having a content of butene-1 units in the form of isotactic pentads (mmmm) from 25 to 70%; intrinsic viscosity [η] measured in tetraline at 135°C from 1 to 3 dL/g; a content of xylene insoluble fraction at 0°C from 3 to 60%.

2. A polyolefin composition according to claim 1 wherein the polymer resin component(A) exhibits a molecular weight distribution (Mw/Mn) measured via GPC ranging from 2 to 8.

3. A polyolefin composition according to claim 1 wherein the butene-1 (co)polymer component(B) exhibits a molecular weight distribution (Mw/Mn) measured via GPC ranging from 3.5 to 9.

4. Fibres prepared with the composition according to claim 1

5. Non-woven fabrics comprising the fibres according to claim 4.

6. Geotexile comprising the fibers according to claim 4.

**Patentansprüche**

1. Polyolefinzusammensetzung, umfassend:

   A) 50-90 Gew.% Polypropylenhomopolymer mit einem Isotaktizitätsindex (Gewichtsprozent der Fraktion, die in siedendem n-Heptan unlöslich ist) höher als 80, vorzugsweise zwischen 90 und 98, oder kristallines Copolymer von Propylen mit Ethylen und/oder einem $\alpha$-Olefin mit 4-10 Kohlenstoffatomen, das 85 % oder mehr Propylen enthält und einen Isotaktizitätsindex gleich oder höher als 80 aufweist;
   B) 10-50 Gew.% Buten-1-(co)polymere mit einem Gehalt an Buten-1-Einheiten in Form von isotaktischen Pentaden (mmmm) von 25 bis 70 %; einer in Tetralin bei 135 °C gemessenen Grenzviskosität [$\eta$] von 1 bis 3 dL/g; einem Gehalt an bei 0 °C in Xylol unlöslicher Fraktion von 3 bis 60 %.

2. Polyolefinzusammensetzung nach Anspruch 1, wobei die Polymerharzkomponente (A) eine Molekulargewichtsverteilung ($M_w/M_n$), gemessen mittels GPC, im Bereich von 2 bis 8 aufweist.

3. Polyolefinzusammensetzung nach Anspruch 1, wobei die Buten-1-(Co)polymerharz-komponente (B) eine Molekulargewichtsverteilung ($M_w/M_n$), gemessen mittels GPC, im Bereich von 3,5 bis 9 aufweist.

4. Fasern, die mit der Zusammensetzung gemäß Anspruch 1 hergestellt sind.

5. Vliesstoffe, umfassend die Fasern gemäß Anspruch 4.

6. Geotextil, umfassend die Fasern gemäß Anspruch 4.

**Revendications**

1. Composition polyoléfinique comprenant :

   A) 50-90% en poids d'un homopolymère de polypropylène, présentant un indice isotactique (pourcentage en poids de fraction insoluble dans du n-heptane à ébullition) supérieur à 80, de préférence entre 90 et 98, ou d'un copolymère cristallin de propylène et d'éthylène et/ou d'une alpha-oléfine comprenant 4-10 atomes de carbone, contenant 85% ou plus de propylène et présentant un indice isotactique égal ou supérieur à 80 ;
   B) 10-50% en poids de (co)polymères de butène-1, présentant une teneur en unités butène-1 sous forme de pentades isotactiques (mmmm) de 25 à 70% ; une viscosité intrinsèque [$\eta$] mesurée dans la tétraline à 135°C de 1 à 3 dl/g ; une teneur en fraction insoluble dans le xylène à 0°C de 3 à 60%.

2. Composition polyoléfinique selon la revendication 1, le constituant (A) de résine polymère présentant une distribution des poids moléculaires (Mw/Mn) mesurée par CPG de 2 à 8.

3. Composition polyoléfinique selon la revendication 1, le constituant (B) de (co)polymère de butène-1 présentant une distribution des poids moléculaires (Mw/Mn) mesurée par CPG de 3,5 à 9.

**4.** Fibres préparées au moyen de la composition selon la revendication 1.

**5.** Tissus non tissés comprenant les fibres selon la revendication 4.

**6.** Géotextile comprenant les fibres selon la revendication 4.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005111282 A1, Dow
- WO 9306168 A1, Exxon
- WO 2005005495 A1
- WO 2006042815 A1
- WO 2006042815 A
- US 4298718 A
- US 4495338 A

- US 4399054 A
- US 4469648 A
- EP 395083 A
- EP 553805 A
- EP 553806 A
- EP 601525 A
- WO 9844001 A

**Non-patent literature cited in the description**

- **H.N. CHENG.** *Journal of Polymer Science,* 1983, vol. 21, 573
- **T. ASAKURA.** *Macromolecules,* 1991, vol. 24, 2334-2340

- **R. CHÛJÔ ; Y. KOGURE, ; T. VÄÄNÄNEN.** *Polymer,* 1994, vol. 35, 339-342